# EUROPEAN PATENT SPECIFICATION

(11) **EP 3 280 683 B1**
(45) Date of publication and mention of the grant of the patent: **25.12.2019**
(21) Application number: 16776976.9
(22) Date of filing: 07.04.2016
(51) Int. Cl.: C02F 1/44, C02F 3/00, C02F 3/10, C02F 103/00, C05B 15/00, C05F 3/04, E03D 9/02, E03F 5/10, C05F 3/06, C02F 9/00, C02F 1/04, C02F 3/28, C02F 11/04, E03F 11/00, C02F 1/00

(54) **A COMPACT SEWAGE TREATMENT SYSTEM IN FLUID COMMUNICATION WITH A WATER CLOSET, AND A METHOD THEREOF**
KOMPAKTES ABWASSERBEHANDLUNGSSYSTEM IN EINER FLÜSSIGKEITSVERBINDUNG MIT EINEM WC UND VERFAHREN DAFÜR
SYSTÈME DE TRAITEMENT COMPACT DES EAUX USÉES EN COMMUNICATION FLUIDIQUE AVEC DES WC, ET PROCÉDÉ ASSOCIÉ

(30) Priority: 10.04.2015 NO 20150422
(43) Date of publication of application: 14.02.2018
(73) Proprietor: Friestad, Håkon O., 3482 Tofte (NO)
(72) Inventor: Friestad, Håkon O., 3482 Tofte (NO)
(74) Representative: Midttun, Gisle Johan
(86) International application number: PCT/NO2016/050065
(87) International publication number: WO 2016/163892

(56) References cited:
- WO-A2-2010/058187
- JP-A- H0 857 491
- JP-A- H11 293 739
- JP-A- 2000 169 270
- US-A- 3 700 565
- US-A1- 2002 100 110
- US-A1- 2002 100 110
- US-A1- 2007 227 985
- US-B1- 7 371 323

## Description

### FIELD OF THE INVENTION

The present invention is related to a compact sewage treatment system in fluid communication with a conventional water closet and a method thereof, and especially to a sewage treatment system providing evaporation of water, and/or recirculation of water, and a method of purifying water and recycling of residues from the system as fertilizer.

### BACKGROUND OF THE INVENTION

The principles of conventional water closets as we know today was patented already in 1775. However, it was first later that water closets were introduced on a larger scale in cities. Today we face challenges in handling the large amount of sewage from water closets. The piping infrastructure of conventional sewage systems are expensive to build and maintain, and the sewage treatment plants are large installations requiring skilled manpower to operate.

Therefore, in prior art there are examples of different solutions with the aim of mitigating cost, complexity and environmental challenges related to conventional water closet systems and handling of sewage.

WO 2010/058187 A2 disclose a self-contained system for treating and recycling waste water, particularly for a toilet cubicle in a railway carriage or the like. Waste water from a toilet pan and wash basin is treated in an aerated membrane bioreactor. The permeate from the bioreactor is exposed to ozone and ultraviolet light in a tank from which a first stream is taken and reused for flushing the toilet. A second stream from the permeate tank is treated to a higher (potable) standard of purity by successive stages of reverse osmosis and ion exchange and is reused for hand washing.

JP 60225694 A disclose an arrangement of a filter comprising fine wooden pieces that is mixed with porous inorganic particles preventing clogging of sewage being applied to the filter. The filter is arranged with a perforated tubing receiving the sewage water to be filtered, and the tubing is distributing the sewage water evenly over the section including the fine wooden pieces. Filtered water is then distributed further from the filter.

US 2002/0100110 A1 disclose a water treatment and recycling system comprising an aeration chamber, a reaction chamber, a water tank, and a plurality of pumps. The water tank houses the treated water and is the supply source for supplying water to different water needs. A first pump comprises a grating collecting solids from the sewage and the solids are grinded before being pumped to the aeration chamber. Then a further pump transfers the content of the aeration chamber into the reaction chamber. The water is treated in the reaction chamber and is thereafter pumped into the water tank. The aeration chamber and reaction chamber contains therein a plurality of specially treated wood chips, and a bio-colony consisting of different microbes and bacteria introduced into the wood chips. The output of fluids from the reaction chamber is further treated with a carbon filter.

It would however, be an advantage to have a sewage treatment system that is compact enough to fit inside, for example a basement of a house, and that have a simple and improved protection against scent from the sewage as well as a simple manner to maintain and to remove residues from the sewage treatment system.

### OBJECT OF THE INVENTION

It is a further object of the present invention to provide an alternative to the prior art.

In particular, it may be seen as an object of the present invention to provide a compact sewage treatment system comprising a collecting tank system arranged with a floating lid like arrangement stopping odors from leaving the treatment system.

### SUMMARY OF THE INVENTION

Thus, the above described object and several other objects are intended to be obtained in a first aspect of the invention by providing a compact sewage treatment system, comprising
- a restroom comprising a water closet;
- a tank located below the water closet;
- a pipe providing fluid communication from the water closet to the interior of the tank;
- an evaporation basin located at a level below the bottom of the tank; wherein
the pipe is feeding liquid comprising sewage and water from the water closet to a perforated container located inside the tank, wherein the perforated container is resting on a bottom surface of the tank, and
shredded bark is arranged inside the tank with the exception of an empty space defined by the perforated container inside the tank,
wherein the shredded bark is floating on top of liquid assembling at the bottom of the tank, wherein the liquid assembling at the bottom of the tank constitutes a biological active swamp; and
an outlet pipe is arranged at a bottom side of the tank at a level above the bottom of the tank defining a top level surface of the swamp;
wherein liquid is streaming from the swamp via the piping to an evaporation basin located at a level below the level of the bottom of the tank.

Further, woodchips may be used instead of, or in combination, with shredded bark.

Further, the shredded bark my be filled up to a top level of the interior of the tank.

Further, liquid streaming from the pipe into the evaporation basin may be streaming instead or in addition to a sedimentation tank.

Further, liquid streaming from the pipe may be distributed to a reverse osmotic system, wherein output liquid from the reverse osmotic system is recirculated to the water closet, or is released directly to surrounding environment.

Further, liquid that is not treated in the reverse osmotic system may be distributed back to the tank, or alternatively to a sedimentation tank.

Further, the evaporation basin may be located inside a house comprising the system, or outside the house wherein a surface of the evaporation basin will be in direct contact with surrounding air.

Further, the shredded bark may be from coniferous trees.

Further, the shredded bark (6) may be from trees.

Further, the container 3 may be a bucket, wherein the opening of the bucket is facing towards the bottom surface of the tank, and wherein the pipe from the water closet is guided through a bottom surface of the bucket facing upwards towards the water closet.

Further, spacing elements may be arranged around the periphery of an opening of the bucket facing towards the bottom of the tank 1, thereby enabling a defined opening providing fluid communication from the inside of the bucket and the swamp 4 outside the bucket in the bottom of the tank 1.

According to the present invention, a method of providing fertilizers is provided, wherein sewage from at least one water closet is distributed to at least one compact treatment system according to the present invention, wherein dry substance or concentrated fluid from the bottom of the evaporation basin is removed and used directly as a fertilizer.

According to the present invention, a method of providing phosphates is provided, wherein sewage from at least one water closet is distributed to at least one compact treatment system according to the present invention,
wherein dry substances or concentrated fluid from the bottom of the evaporation basin (8) is removed and used directly as a fertilizer, or is recrystallized as phosphates again and is used for other purposes.

According to the present invention, a method of providing clean water is provided, wherein sewage from at least one closet is treated in a system according to the present invention, wherein liquid from the outlet pipe, alternatively via a sedimentation tank, is connected to a reverse osmotic system,
wherein clean water output from the reverse osmotic system is recirculated to the at least one water closet, or is used for other purposes, or is released directly to surrounding environment.

Respective aspects of the present invention may each be combined with any of the other aspects. These and other aspects of the invention will be apparent from and elucidated with reference to the embodiments described hereinafter.

### DESCRIPTION OF THE FIGURES

The compact sewage treatment system according to the present invention will now be described in more detail with reference to the accompanying figures. The accompanying figures illustrates an example of embodiment of the present invention and is not to be construed as being limiting to other possible embodiments falling within the scope of the attached claim set.

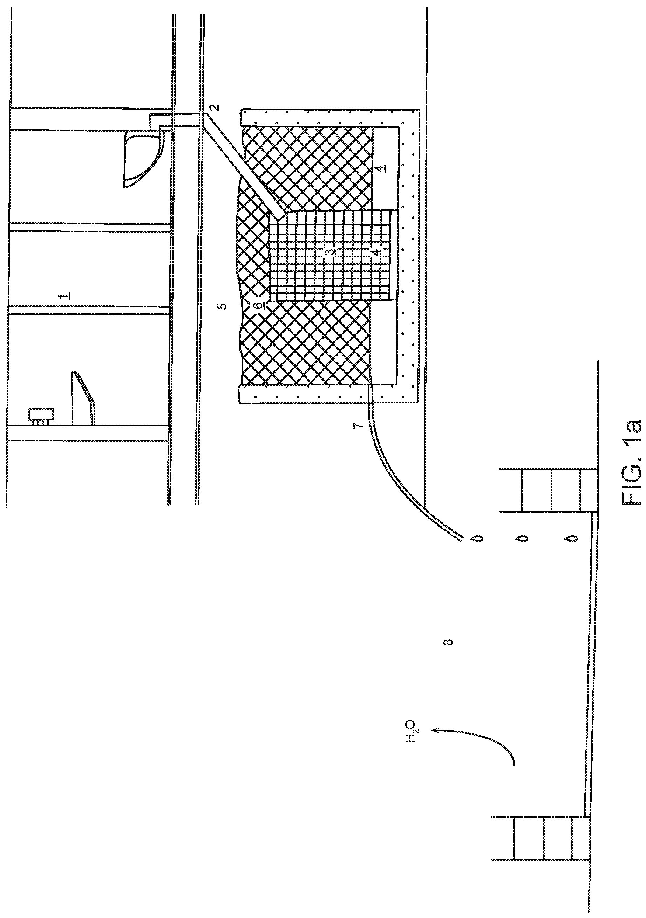

Figure 1a illustrates an example of embodiment of the invention,

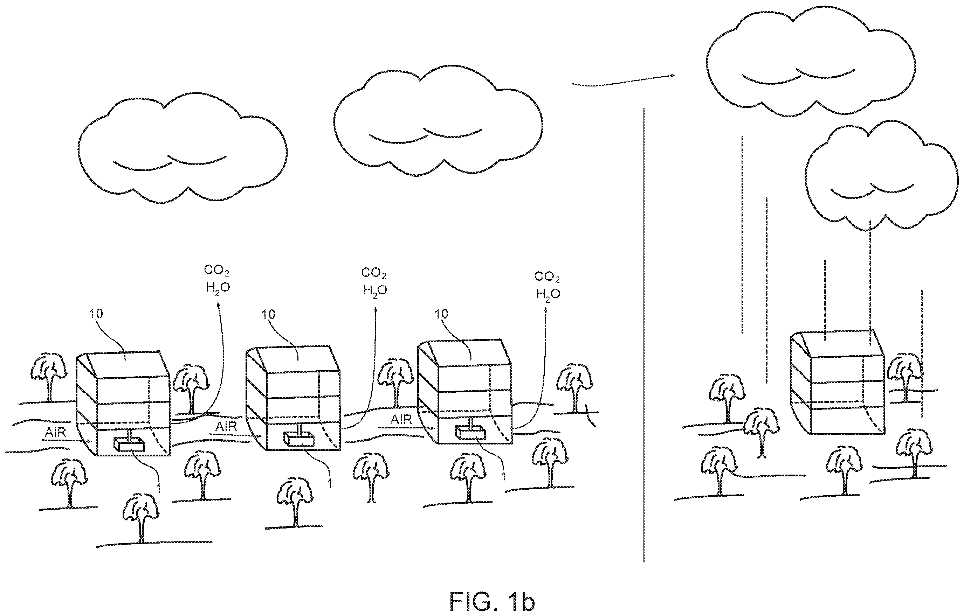

Figure 1b illustrates another example of embodiment of the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. The mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

The scent problem of sewage systems stems mainly from the component skatole (3-methylindole) in feces and ammonia formed as decomposition products of urea and uric acid in the urine.

According to an aspect of the present invention, sewage is collected in a tank system provided with a layer of bark cut to shreds. The layer of bark is floating on top of the sewage collected in the tank and is functioning as a sort of lid preventing any scent to be released from the tank. Therefore, no filter providing filtering of air is necessary in any embodiments of the present invention.

According to a further aspect of the present invention, removal of residual water from the sewage can be done with a natural process of evaporation of residual water from the tank system. Therefore, in some examples of embodiments of the present invention there is no need for a water removal system.

According to yet another aspect of the present invention, residual water may be collected and be further treated and achieve a water quality that allow the water to be recycled in the water closet system of a house wherein the system is installed.

According to yet another aspect of the present invention, solids in the sewage falls down to the bottom of the tank system in addition to water from the water closet due to gravitation into a biological active swamp wherein the solids are decomposed mostly to carbon dioxide and water. Some residual solids may not be decomposed. However, the natural decomposition of the bark will release space in the tank providing additional space for solids that are not decomposed. In some examples of embodiments, dimensioned for a normal household, and the sewage system according to the present invention have been used over time, it seems necessary to refill bark only every second year.

With reference to Figure 1a, an example of embodiment of the present invention is illustrated. A tank 1 can be made in any shape and size and material as long as the tank volume can handle the sewage volume of the location the tank is to be located, and the material of the tank can withstand sewage. It is known from prior art how much waste humans produce, and it is therefore a simple and straight forward process of calculating a volume of a tank for an ordinary skilled person. The tank 1 in Figure 1a is for example 1100 liter.

Inside the tank 1 there is another perforated container 3 receiving sewage from a water closet located above the tank 1. A pipe 2 is feeding sewage from the water closet to the container 3 with the help of gravitation. The pipe 2 is guided through an opening located at a top section of the container 3. Shredded bark 6 is arranged inside the tank 1 with the exception of the volume defined by the perforated tank 3.

At the bottom of the tank 1 there is a biological active swamp 4 which extends inside the bottom of the container 3 via the perforations of the walls of the container
Above the bottom of the tank 1, at a level of the top surface the swamp 4 (for example 35 cm), there is arranged an outlet tube opening 7 from the tank 1. For example, a connection can be arranged in the outlet opening that is adapted to an ordinary water hose for garden use, or for attachment of any kind of tubing. The pipe or water hose 7 is then arranged in fluid communication with an evaporation basin 8. The evaporation basin 8 can be arranged at a slightly lower level than the bottom of the tank 1, thereby gravitation will provide the streaming of fluids out of the swamp 4 of the tank 1 to the evaporation basin 8.

The volume of the container 3 may be much less than the volume of the tank 1. For example, as disclosed above, the tank volume in Figure 1a is 1100 liter, and the volume of the container 3 is 80 liter in this example of embodiment. In the example depicted in Figure 1a the height of the tank is 1,1 meter while the area of the bottom of the tank is 1,0 m². When the shredded bark is filled the height of the bark will be 0,75 meter.

The purpose of the perforated container 3 is to obstruct fine particles and residues in the volume surrounding the container 3 to block the space constituted by the container 3. Thereby any obstruction of the outlet of the pipe 2 from the water closet is avoided. There is always a volume available inside the tank to receive the sewage. The shredded bark 6 is floating on top of the liquids of the swamp 4, and when added material is dumped inside the container 3, the shredded bark 6 will float upwards, and when the swamp level passes the outlet opening 7 liquid from the swamp will be streaming down to the evaporation chamber 8.

Since it is only fluid that may pass out of the swamp inside the container 3 at the bottom of the tank 1 via the perforations, there is only liquid that is communicated via the outlet opening 7.

The bark 6 is used without any other pre-treatment of any kind. The size of the shreds can be of variable size, for example being a few centimeters up to larger sizes like fifty centimeters in size. Since the container 3 has the purpose of defining an empty space around the outlet pipe 2 from the water closet inside the tank 1, there is of course a relationship between the size of the perforations of the container 3 and the size of the shreds. Therefore, a larger number of smaller perforations are preferable.

In an alternative embodiment of the container 3, the container 3 is made out of a bucket like object wherein the opening of the bucket is facing downwards towards the bottom of the tank 1, while the pipe 2 from the water closet is guided through for example the bottom surface of the bucket. The fluid communication from inside the bucket and the swamp 4 outside the bucket is provided by liquid leakage in the interface area between the bucket wall and the bottom surface of the tank 1. It is also possible to arrange some spacing elements around the periphery of the opening of the bucket facing downwards towards the bottom surface of the tank 1 providing a small opening of a defined size enabling the fluid communication.

In the example of embodiment illustrated in Figure 1a, the size of the evaporation basin 8 is a four square meter horizontally oriented concrete surface encircled by a forty centimetre high concrete wall.

It is further within the scope of the present invention to allow spill water from showers, washing machines etc. to be processed in an example of embodiment of the present invention.

The evaporation basin 8 will over years of use accumulate dry substances like phosphate at the bottom of the basin 8. According to a method according to the present invention, phosphate can be removed from a plurality of evaporation basins 8 and be used directly as a fertilizer. Alternatively, the dry substances may be recrystallized and used for other purposes. An example of collecting sewage from a plurality of households is illustrated in Figure 1b.

It is further within the scope of the present invention to connect the pipe or hose 7 from the tank 1 directly to a reverse osmotic system of the type used in many households for cleaning drinking water. The reverse osmotic system may also be connected to an outlet from the evaporation basin 8. Therefore, according to an example of a method according to the present invention, making of clean drinking water is possible. In an example of embodiment, some water not passing the reverse osmotic system is recirculated to for example the tank 1 or a sedimentation tank.

Therefore, from an environmental point of view, respective examples of embodiments of the present invention all sewage fluids disappear as water and no sewage sludge is created. No external treatment plant is necessary.

## Claims

1. A compact sewage treatment system, comprising
- a restroom comprising a water closet;
- a tank (1) located below the water closet;
- a pipe (2) providing fluid communication from the water closet to the interior of the tank (1);
- an evaporation basin (8) located at a level below the bottom of the tank (1); wherein
the pipe (2) is feeding liquid comprising sewage and water from the water closet to a perforated container (3) located inside the tank (1), wherein the perforated container (3) is resting on a bottom surface of the tank (1), and
shredded bark (6) is arranged inside the tank (1) with the exception of an empty space defined by the perforated container (3) inside the tank (1),
wherein the shredded bark (6) is floating on top of liquid assembling at the bottom of the tank (1), wherein the liquid assembling at the bottom of the tank (1) constitutes a biological active swamp (4); and
an outlet pipe (7) is arranged at a bottom side of the tank (1) at a level above the bottom of the tank (1) defining a top level surface of the swamp (4);
wherein liquid is streaming from the swamp (4) via the piping (7) to an evaporation basin (8) located at a level below the level of the bottom of the tank (1).

2. The system according to claim 1, wherein woodchips are used instead of, or in combination, with shredded bark.

3. The system according to claim 1, wherein the shredded bark (6) is filled up to a top level of the interior of tank (1).

4. The system according to claim 1, wherein liquid streaming from the pipe (7) into the evaporation basin (8) instead, or in addition, is distributed to a sedimentation tank.

5. The system according to claim 1, wherein liquid streaming from the pipe (7) is distributed to a reverse osmotic system, wherein output liquid from the reverse osmotic system is recirculated to the water closet, or is released directly to surrounding environment.

6. The system according to claim 5, wherein liquid streaming in the pipe (7) that is not treated in the reverse osmotic system is distributed back to the tank (1), or to a sedimentation tank.

7. The system according to claim 1, wherein the evaporation basin (8) is located inside a house comprising the system, or outside the house wherein a surface of the evaporation basin (8) is in direct contact with surrounding air.

8. The system according to claim 1, wherein the shredded bark (6) is from coniferous trees.

9. The system according to claim 1, wherein the shredded bark (6) is from trees.

10. The system according to any preceding claim 1-9, wherein the container 3 is a bucket, wherein the opening of the bucket is facing towards the bottom surface of the tank 1, and wherein the pipe 2 from the water closet is guided through a bottom surface of the bucket facing upwards towards the water closet.

11. The system according to claim 10, wherein spacing elements are arranged around the periphery of opening of the bucket facing towards the bottom of the tank 1, thereby enabling a defined opening providing fluid communication from the inside of the bucket and the swamp 4 to the outside of the bucket in the bottom of the tank 1.

12. A method for providing fertilizers, wherein sewage from at least one water closet is distributed to at least one compact treatment system according to any claim 1-9, wherein dry substances or concentrated fluid from the bottom of the evaporation basin (8) is removed and used directly as a fertilizer.

13. A method of providing phosphates, wherein sewage from at least one water closet is distributed to at least one compact treatment system according to any claim 1-9, wherein dry substances or concentrated fluid from the bottom of the evaporation basin (8) is recrystallized to phosphates again and is used for other purposes.

14. A method of providing clean water, wherein sewage from at least one closet is treated in a system according to claim 1, wherein liquid from the outlet pipe (7), alternatively via a sedimentation tank is connected to a reverse osmotic system, wherein clean water output from the reverse osmotic system is recirculated to the at least one water closet or used for other purposes, or is released directly to surrounding environment.

## Patentansprüche

1. Kompaktes Abwasseraufbereitungssystem, umfassend
- eine Toilette, umfassend ein Wasserklosett;
- einen Tank (1), der sich unter dem Wasserklosett befindet;
- ein Rohr (2), das eine Fluidverbindung von dem Wasserklosett zu dem Inneren des Tanks (1) bereitstellt;
- ein Verdunstungsbecken (8), das sich auf einer Ebene unter dem Boden des Tanks (1) befindet; wobei
das Rohr (2) Flüssigkeit, die Abwasser und Wasser umfasst, aus dem Wasserklosett in einen perforierten Behälter (3) einspeist, der sich innerhalb des Tanks (1) befindet, wobei der perforierte Behälter (3) auf einer Bodenoberfläche des Tanks (1) aufliegt, und geschnitzelte Rinde (6) innerhalb des Tanks (1) angeordnet ist, mit Ausnahme eines Leerraums, der durch den perforierten Behälter (3) innerhalb des Tanks (1) definiert ist, wobei die geschnitzelte Rinde (6) oben auf der sich an dem Boden des Tanks (1) ansammelnden Flüssigkeit schwimmt, wobei die sich an dem Boden des Tanks (1) ansammelnde Flüssigkeit einen biologisch aktiven Sumpf (4) bildet; und
ein Auslassrohr (7) an einer Unterseite des Tanks (1) auf einer Ebene oberhalb des Bodens des Tanks (1) angeordnet ist, die eine Oberfläche der obersten Ebene des Sumpfes (4) definiert;
wobei Flüssigkeit von dem Sumpf (4) über die Rohrleitung (7) zu einem Verdunstungsbecken (8) strömt, das sich auf einer Ebene unter dem Boden des Tanks (1) befindet.

2. System nach Anspruch 1, wobei Hackschnitzel verwendet werden, anstelle von oder in Kombination mit geschnitzelter Rinde.

3. System nach Anspruch 1, wobei die geschnitzelte Rinde (6) bis zu einer obersten Ebene des Inneren des Tanks (1) gefüllt wird.

4. System nach Anspruch 1, wobei Flüssigkeit, die aus dem Rohr (7) in das Verdunstungsbecken (8) strömt, stattdessen oder zusätzlich in ein Absetzbecken geleitet wird.

5. System nach Anspruch 1, wobei Flüssigkeit, die aus dem Rohr (7) strömt, zu einem Umkehrosmosesystem geleitet wird, wobei Ausgabeflüssigkeit aus dem Umkehrosmosesystem an das Wasserklosett zurückgeführt wird, oder direkt an eine Umgebung abgegeben wird.

6. System nach Anspruch 5, wobei Flüssigkeit, die in dem Rohr (7) strömt, die nicht in dem Umkehrosmosesystem aufbereitet wird, zurück in den Tank (1) oder zu einem Absetzbecken geleitet wird.

7. System nach Anspruch 1, wobei sich das Verdunstungsbecken (8) innerhalb eines Hauses, das das System umfasst, oder außerhalb des Hauses befindet, wobei eine Oberfläche des Verdunstungsbeckens (8) in direktem Kontakt mit Umgebungsluft steht.

8. System nach Anspruch 1, wobei die geschnitzelte Rinde (6) von Nadelbäumen ist.

9. System nach Anspruch 1, wobei die geschnitzelte Rinde (6) von Bäumen ist.

10. System nach einem der vorhergehenden Ansprüche 1-9, wobei der Behälter 3 ein Eimer ist, wobei die Öffnung des Eimers der Bodenoberfläche des Tanks 1 zugewandt ist, und wobei das Rohr 2 von dem Wasserklosett durch eine Bodenoberfläche des Eimers nach oben zu dem Wasserklosett geführt wird.

11. System nach Anspruch 10, wobei Abstandselemente um den Umfang der Öffnung des Eimers, der der Bodenoberfläche des Tanks 1 zugewandt ist, angeordnet sind, wodurch eine definierte Öffnung ermöglicht wird, die eine Fluidverbindung von innerhalb des Eimers und des Sumpfes 4 nach außerhalb des Eimers in den Boden des Tanks 1 bereitstellt.

12. Verfahren zum Bereitstellen von Düngemitteln, wobei Abwasser von mindestens einem Wasserklosett an mindestens ein kompaktes Aufbereitungssystem nach einem der Ansprüche 1-9 geleitet wird, wobei Trockensubstanzen oder konzentriertes Fluid von dem Boden des Verdunstungsbecken (8) entfernt und direkt als ein Düngemittel verwendet werden.

13. Verfahren zum Bereitstellen von Phosphaten, wobei Abwasser von mindestens einem Wasserklosett an mindestens ein kompaktes Aufbereitungssystem nach einem der Ansprüche 1-9 geleitet wird, wobei Trockensubstanzen oder konzentriertes Fluid von dem Boden des Verdunstungsbecken (8) wieder zu Phosphaten rekristallisiert wird und zu anderen Zwecken verwendet wird.

14. Verfahren zum Bereitstellen von sauberem Wasser, wobei Abwasser aus mindestens einem Klosett in einem System nach Anspruch 1 aufbereitet wird, wobei Flüssigkeit aus dem Auslassrohr (7), alternativ über ein Absetzbecken, mit einem Umkehrosmosesystem verbunden wird, wobei sauberes Wasser, das von dem Umkehrosmosesystem ausgegeben wird, zu dem mindestens einen Wasserklosett zurückgeführt oder für andere Zwecke verwendet wird oder direkt an die Umgebung abgegeben wird.

## Revendications

1. Système de traitement des eaux usées compact, comprenant
- des toilettes comprenant une toilette ;
- un réservoir (1) situé en dessous de la toilette ;
- un tuyau (2) assurant la communication fluidique de la toilette à l'intérieur du réservoir (1) ;
- un bassin d'évaporation (8) situé à un niveau en dessous du fond du réservoir (1) ; dans lequel
le tuyau (2) alimente en liquide, comprenant les eaux usées et l'eau de la toilette, un récipient perforé (3) situé à l'intérieur du réservoir (1), le récipient perforé (3) reposant sur une surface de fond du réservoir (1), et
de l'écorce filamentée (6) est disposée à l'intérieur du réservoir (1) à l'exception d'un espace vide défini par le récipient perforé (3) à l'intérieur du réservoir (1)
dans lequel l'écorce filamentée (6) flotte au-dessus de l'ensemble liquide au fond du réservoir (1), l'ensemble liquide au fond du réservoir (1) constituant un marécage biologiquement actif (4) ; et
un tuyau de sortie (7) est disposé sur un côté du fond du réservoir (1) à un niveau supérieur du fond du réservoir (1) définissant une surface de niveau au dessus du marécage (4) ;
dans lequel le liquide s'écoule du marécage (4) par l'intermédiaire de la tuyauterie (7) vers un bassin d'évaporation (8) situé à un niveau en dessous du niveau du fond du réservoir (1).

2. Système selon la revendication 1, dans lequel des copeaux de bois sont utilisés au lieu de l'écorce filamentée ou en combinaison avec celle-ci.

3. Système selon la revendication 1, dans lequel l'écorce filamentée (6) remplit un niveau au dessus de l'intérieur du réservoir (1).

4. Système selon la revendication 1, dans lequel le liquide s'écoulant du tuyau (7), plutôt, ou en plus, dans le bassin d'évaporation (8) est distribué dans un réservoir de sédimentation.

5. Système selon la revendication 1, dans lequel le liquide s'écoulant du tuyau (7) est distribué dans un système osmotique inverse, dans lequel le liquide sortant du système osmotique inverse est recirculé dans la toilette, ou rejeté directement dans le milieu environnant.

6. Système selon la revendication 5, dans lequel le liquide s'écoulant dans le tuyau (7) qui n'est pas traité dans le système osmotique inverse est redistribué dans le réservoir (1) ou dans un réservoir de sédimentation.

7. Système selon la revendication 1, dans lequel le bassin d'évaporation (8) est situé à l'intérieur d'une maison comprenant le système, ou à l'extérieur de la maison, une surface du bassin d'évaporation (8) étant en contact direct avec l'air environnant.

8. Système selon la revendication 1, dans lequel l'écorce filamentée (6) provient de conifères.

9. Système selon la revendication 1, dans lequel l'écorce filamentée (6) provient d'arbres.

10. Système selon l'une quelconque des revendications précédentes 1 à 9, dans lequel le récipient 3 est un seau, dans lequel l'ouverture du seau est orientée vers la surface de fond du réservoir 1, et dans lequel le tuyau 2 de la toilette est guidé à travers une surface de fond du seau faisant face vers le haut en direction de la toilette.

11. Système selon la revendication 10, dans lequel des éléments d'espacement sont disposés autour de la périphérie de l'ouverture du seau faisant face au fond du réservoir 1, ce qui permet une ouverture définie fournissant une communication fluidique depuis l'intérieur du seau et du marécage 4 à l'extérieur du seau dans le fond du réservoir 1.

12. Procédé de fourniture d'engrais, dans lequel les eaux usées provenant d'au moins une toilette sont distribuées dans au moins un système de traitement compact selon l'une quelconque des revendications 1 à 9, dans lequel des substances sèches ou du fluide concentré provenant du fond du bassin d'évaporation (8) sont retirés et utilisés directement comme engrais.

13. Procédé de fourniture de phosphates, dans lequel les eaux usées d'au moins une toilette sont distribuées dans au moins un système de traitement compact selon l'une quelconque des revendications 1 à 9, dans lequel les substances sèches ou le fluide concentré provenant du fond du bassin d'évaporation (8) sont recristallisés en phosphates et utilisés à d'autres fins.

14. Procédé de fourniture d'eau propre, dans lequel les eaux usées provenant d'au moins une toilette sont traitées dans un système selon la revendication 1, dans lequel le liquide du tuyau de sortie (7), alternativement, par l'intermédiaire d'un réservoir de sédimentation, est relié à un système osmotique inverse, dans lequel de l'eau propre sortant du système osmotique inverse est recirculée dans l'au moins une toilette, ou utilisée à d'autres fins, ou rejetée directement dans le milieu environnant.
